# FASCICULE DE BREVET EUROPEEN

(11) **EP 2 194 602 B1**
(45) Date de publication et mention de la délivrance du brevet: **02.09.2015**
(21) Numéro de dépôt: 09175754.2
(22) Date de dépôt: 12.11.2009
(51) Int. Cl.: H01Q 1/28, H01Q 19/17, H01Q 21/06

(54) **Antenne à partage de sources et procède d'élaboration d'une antenne à partage de sources pour l'élaboration de multi-faisceaux**
Antenne mit gemeinsam benützten Elementarstrahlern und Verfahren zum Entwurf einer Mehrstrahlantenne mit gemeinsam benützten Elementarstrahlern
Antenna with shared sources and design process for a multi-beam antenna with shared sources

(30) Priorité: 05.12.2008 FR 0806841
(43) Date de publication de la demande: 09.06.2010
(73) Titulaire: Thales, 92200 Neuilly Sur Seine (FR)
(72) Inventeur: Raguenet, Gérard, 31600 Eaunes (FR)
(74) Mandataire: Nguyen, Dominique

(56) Documents cités:
- EP-A- 0 340 429
- EP-A- 0 899 814
- EP-A- 1 102 350
- WO-A-2007/103589
- US-B1- 6 531 980

## Description

La présente invention concerne une antenne à partage de sources et un procédé d'élaboration d'une antenne à partage de sources pour l'élaboration de multi-faisceaux. Elle s'applique notamment au domaine des télécommunications par satellite.

Dans le cadre des télécommunications par satellites, les besoins des opérateurs évoluent vers des terminaux de plus en plus petits, de taille A4 ou A5, ou des terminaux de type PDA (en anglais : Personal Digital Assistance) ou des téléphones, pour atteindre des utilisateurs en mode nomadique.

De nombreuses demandes concernent aussi l'évolution des systèmes existants pour des applications internet ou haut débit.

Pour réaliser ces missions, les architectures d'antennes sont de plus en plus complexes, comportent un grand nombre de sources associées à de nombreux amplificateurs pour assurer l'élaboration d'une centaine ou de plusieurs centaines de faisceaux de plus en plus étroits et assurer une couverture à l'échelle d'un continent ou mondiale. La formation des faisceaux est réalisée soit avec un réseau de formation de faisceaux BFN (en anglais : Beam Forming Network) numérique embarqué à bord du satellite, soit via un dispositif de formation de faisceaux localisé au sol GBBF (en anglais : Ground Based Beam Forming).

Pour des applications en bande étroite et pour les bandes de fréquences basses inférieures à 10GHz, telles que les bandes L ou S, il est difficile de multiplier le nombre d'antennes vu leur grande taille, en général de 9 à 15m, voire même 20m, de diamètre pour les réflecteurs déployables. Dans ce cas, il est connu d'utiliser une ou deux antennes actives placées devant des réflecteurs, la formation de faisceaux étant réalisée soit à bord de manière analogique ou numérique, soit par un dispositif au sol.

Pour des applications à large bande et pour les bandes de fréquences hautes supérieures à 10GHz, les techniques de numérisation sont limitées dans la capacité de traitement de la bande à bord, dans la complexité et la faisabilité technologique du réseau de formation de faisceaux BFN et surtout dans la consommation d'énergie excessive au niveau de la charge utile. Généralement la charge utile est configurée de manière passive avec une structure selon laquelle une source correspond à un faisceau particulier. Pour des raisons de contraintes d'isolation inter-faisceaux et de performance de gain, ceci implique une multiplication du nombre d'antennes sur le satellite en fonction du scenario de réutilisation de fréquences d'un spot à l'autre. Ce scénario est appelé code à trois ou quatre couleurs et nécessite, en général une antenne par sous-bande de fréquences, ou couleur, utilisée.

Il est connu de réaliser une synthèse de faisceaux avec un réseau de sources élémentaires placé au foyer d'un réflecteur parabolique et en réutilisant des sources d'un spot à un autre tel que décrit notamment dans les brevets EP 0340429 et EP0333166. Ces architectures permettent l'utilisation d'antennes compactes à faible rapport F/D, F étant la distance focale et D le diamètre du réflecteur et de resserrer les faisceaux, mais entraînent de fortes aberrations dans les cas de fonctionnement en défocalisé.

Il est également connu de réaliser des structures rayonnantes comportant un ensemble de sources élémentaires couplées entre elles par rayonnements électromagnétiques et permettant de rayonner des ondes en phase, tel que décrit notamment dans les brevets EP0899814 et EP0617480. Ces structures sont excitées par une source élémentaire alimentée par un signal d'excitation de type radio fréquence provenant d'un canal de la charge utile du satellite.

La présente invention a pour but de remédier aux problèmes des systèmes de formation de faisceaux connus et de proposer une antenne à partage de sources permettant d'élaborer un grand nombre de faisceaux étroits de façon simple, sans utiliser de circuits complexes de formation de faisceaux, les faisceaux assurant un positionnement des spots sans trous de couverture, les spots présentant des rapports C/I performants, le rapport C/I étant le rapport entre le signal utile C et les signaux interférents I.

A cet effet, l'invention a pour objet une antenne à partage de sources pour l'élaboration de multi-faisceaux, comportant une pluralité de sources élémentaires identiques et espacées d'un pas constant, caractérisée en ce que :
- les sources élémentaires sont associées en sous-réseaux identiques autour d'une source élémentaire centrale, chaque sous-réseau éclaire un réflecteur, les sources élémentaires de chaque sous-réseau étant couplées en phase entre elles par couplage électromagnétique,
- et en ce que deux sous-réseaux successifs comportent au moins une source élémentaire en commun et sont décalés d'une distance correspondant à un nombre de pas prédéterminé supérieur ou égal à un.

Avantageusement, chaque sous-réseau comporte une seule source d'excitation.

Selon un mode de réalisation de l'invention, la source d'excitation est la source élémentaire centrale de chaque sous-réseau.

Selon un mode de réalisation de l'invention, les sources élémentaires sont des patchs métalliques déposés sur une première face d'un substrat diélectrique comportant une deuxième face opposée, parallèle à la première face et montée sur un plan métallique formant plan de masse et la source excitatrice est montée sur la deuxième face du diélectrique, au droit de la source élémentaire centrale de chaque sous-réseau. La source excitatrice peut comporter une fente d'excitation gravée dans le plan de masse au droit de la source élémentaire centrale de chaque sous-réseau.

Selon un autre mode de réalisation de l'invention, les sources élémentaires sont des antennes diélectriques.

L'invention concerne également un procédé d'élaboration d'une antenne à partage de sources selon l'une des revendications précédentes pour l'élaboration de multi-faisceaux, l'antenne comportant une pluralité de sources élémentaires identiques et espacées d'un pas constant, caractérisé en ce qu'il comporte les étapes suivantes :
- choisir un diamètre D de réflecteur parabolique,
- choisir un type de source élémentaire,
- dimensionner et réaliser un sous-réseau de plusieurs sources élémentaires autour d'une source centrale, le sous-réseau éclairant ledit réflecteur et étant destiné à synthétiser un faisceau ayant une ouverture angulaire prédéterminée, les sources du sous-réseau étant couplées en phase entre elles par couplage électromagnétique,
- choisir un nombre de pas de décalage entre deux sous-réseaux successifs, le nombre de pas étant supérieur ou égal à un et tel que les deux sous-réseaux successifs comportent au moins une source élémentaire en commun,
- déterminer une distance focale F du réflecteur parabolique,
- calculer l'ouverture angulaire des faisceaux correspondants aux choix réalisés aux étapes précédentes et comparer des performances théoriques de l'antenne à des performances souhaitées.

Avantageusement, si les performances théoriques ne correspondent pas aux performances souhaitées, le procédé consiste en outre à modifier à modifier les dimensions du réflecteur vers une valeur plus grande du rapport F/D, à augmenter les dimensions du sous-réseau, et donc sa directivité, proportionnellement à la distance focale du réflecteur et à recalculer les nouvelles performances théoriques de l'antenne avec ces nouvelles dimensions

D'autres particularités et avantages de l'invention apparaîtront clairement dans la suite de la description donnée à titre d'exemple purement illustratif et non limitatif, en référence aux dessins schématiques annexés qui représentent :
- figure 1: un schéma d'un exemple de couverture obtenue avec une configuration d'une cinquantaine de spots, selon l'invention ;
- figures 2a, 2b, 2c : des schémas de trois exemples de configuration de sources à maille hexagonale, selon l'invention;
- figures 3a et 3b : des schémas de deux exemples de configuration de sources à maille rectangulaire, selon l'invention;
- figure 4: un exemple de diagramme de rayonnement théorique obtenu avec un sous-réseau comportant sept sources réparties dans une maille hexagonale, selon l'invention;
- figure 5 : un exemple de couverture de l'Europe avec une configuration de réseau focal à 43 faisceaux correspondant à 43 spots, selon l'invention ;
- figure 6 : un premier exemple d'excitation d'un sous-réseau comportant plusieurs sources élémentaires de type patch, selon l'invention ;
- figures 7a et 7b : deux vues schématiques, respectivement en perspective et de face, d'un exemple de sous-réseau comportant plusieurs sources élémentaires de type antennes diélectriques, selon l'invention ;
- figures 8a et 8b : deux vues schématiques respectivement en coupe transversale et en vue de dessus, d'un exemple de réseau focal comportant plusieurs sous-réseaux d'antennes diélectriques, selon l'invention ;
- figure 9 : un exemple d'antenne comportant un réseau multi-sources placé dans le plan focal d'un réflecteur parabolique.

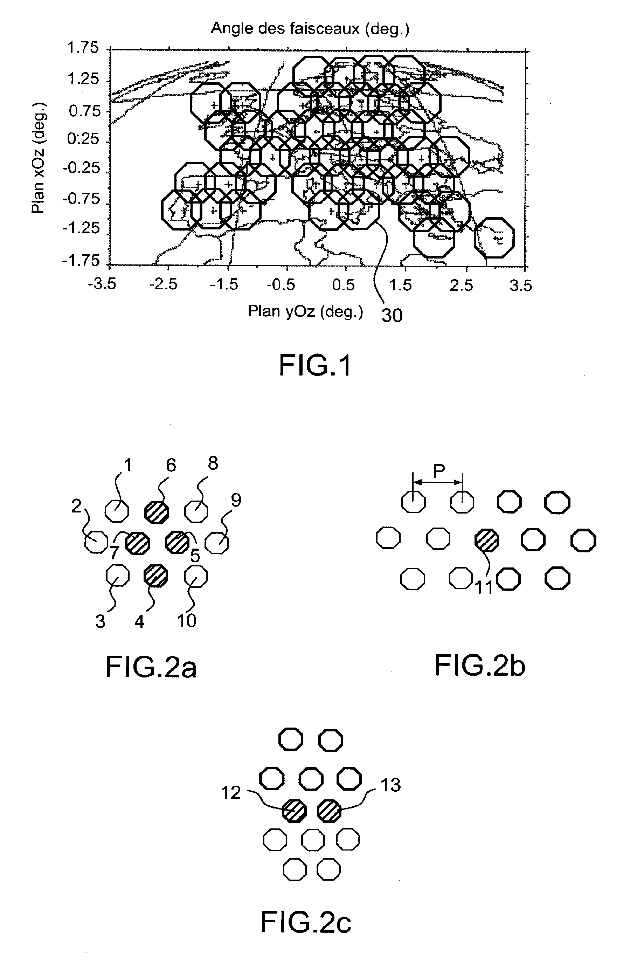

L'architecture d'antenne selon l'invention doit permettre la transmission d'informations vers des terminaux de très petite taille. La taille des terminaux visés impose les valeurs que doivent avoir les paramètres de l'antenne tels que le rapport du gain sur la température de bruit G/T, appelé facteur de mérite, et la puissance isotrope rayonnée équivalente PIRE (en anglais EIRP : Equivalent Isotropic Radiated Power). Pour une couverture géographique et une fréquence données, le paramètre G/T dépend directement du nombre de faisceaux à élaborer. Par conséquent, à une bande de fréquence et une valeur de G/T fixées correspond un nombre de faisceaux et une taille des faisceaux nécessaires pour réaliser une couverture donnée. La figure 1 montre un exemple de couverture obtenue avec une configuration de quarante trois spots 30, les spots 30 correspondant à des angles de faisceaux e égaux à 0,5°. Pour réaliser une couverture optimale, tous les spots doivent se toucher, voire même s'entrelacer, et le gain de l'antenne doit être optimisé au creux de chaque maille correspondant à l'intersection entre trois spots dans le cas d'une maille triangulaire ou hexagonale.

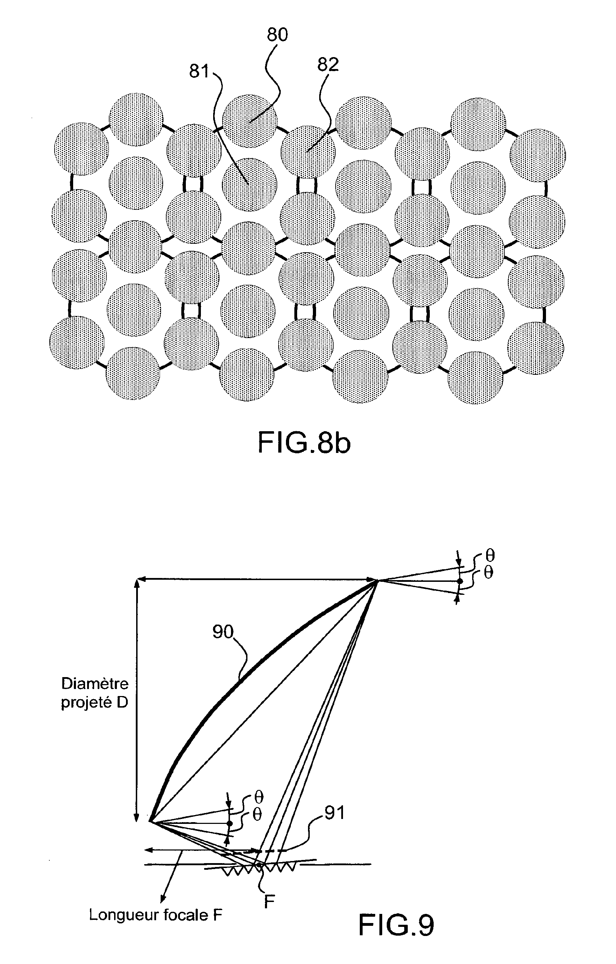

La taille requise pour les spots impose un dimensionnement minimal pour le diamètre du réflecteur parabolique 90 à utiliser pour focaliser l'énergie. Il reste alors à définir la source ou le réseau de sources élémentaires qui sera placé dans la zone focale F du réflecteur et qui devra éclairer ce réflecteur dans une configuration multi-spots. La figure 9 montre un exemple d'antenne comportant un réseau multi-sources 91 placé dans le plan focal d'un réflecteur parabolique.

La source doit synthétiser une tache focale induite par le réflecteur parabolique dans le voisinage de son plan focal. Cependant l'encombrement d'une source classique, comme celle utilisée dans les antennes où une source correspond à un faisceau, ne permet pas le positionnement des spots de façon qu'ils se touchent. Pour que les spots se touchent, il faut diminuer la taille des sources afin de resserrer les faisceaux mais au détriment du rendement général de l'antenne, car dans ce cas, les sources illuminent le bord du réflecteur à des niveaux voisins ou inférieurs à -3dB par rapport au maximum. Les rendements obtenus sont alors de l'ordre de 25 ou 30%, ce qui est inacceptable.

Pour ne pas multiplier le nombre d'antennes sur le satellite, l'invention consiste à utiliser une nouvelle configuration de sources permettant de réutiliser des sources élémentaires d'un spot à un autre spot et de resserrer ainsi les faisceaux. Les figures 2a, 2b, 2c représentent des schémas en vue de dessus de trois exemples de configuration de sources à maille hexagonale, selon l'invention.

Sur ces figures sont représentées plusieurs sources élémentaires de type patch. Les sources élémentaires sont toutes identiques, espacées d'un pas P constant et sont groupées en deux sous-réseaux de sept sources élémentaires dont certaines en partage entre les deux sous-réseaux. Sur la figure 2a, le premier sous-réseau est constitué par les sources 1 à 7 et le deuxième réseau est constitué par les sources 4 à 10, les quatre sources élémentaires 4 à 7 étant en partage entre les deux sous-réseaux, les autres sources élémentaires 1 à 3 et 8 à 10 étant indépendantes. Sur la figure 2b, une seule source 11 est en partage, sur la figure 2c, deux sources 12, 13 sont en partage. Dans ces exemples, chaque sous-réseau est constitué d'une source élémentaire centrale entourée de six sources élémentaires périphériques formant une maille hexagonale. Les deux sous-réseaux sont décalés l'un de l'autre par une translation correspondant à un nombre de pas P choisi, par exemple le décalage peut être choisi égal à un pas comme représenté sur la figure 2a ou à deux pas comme représenté sur les figures 2b et 2c. Chaque sous-réseau est destiné à synthétiser un faisceau correspondant à un spot au sol. Ainsi, par exemple dans le cas de la figure 2a, chaque spot sera réalisé par trois sources élémentaires indépendantes et quatre sources élémentaires en partage, toutes les sources élémentaires d'un même sous-réseau étant alimentées en phase et avec la même amplitude. La réutilisation de sources élémentaires en partage d'un sous-réseau à un autre sous-réseau permet de resserrer les faisceaux et d'obtenir des spots qui se touchent. Dans l'exemple représenté sur la figure 2a, les faisceaux synthétisés seront les plus serrés car il y a quatre sources élémentaires en partage sur les sept utilisées pour l'élaboration d'un spot.

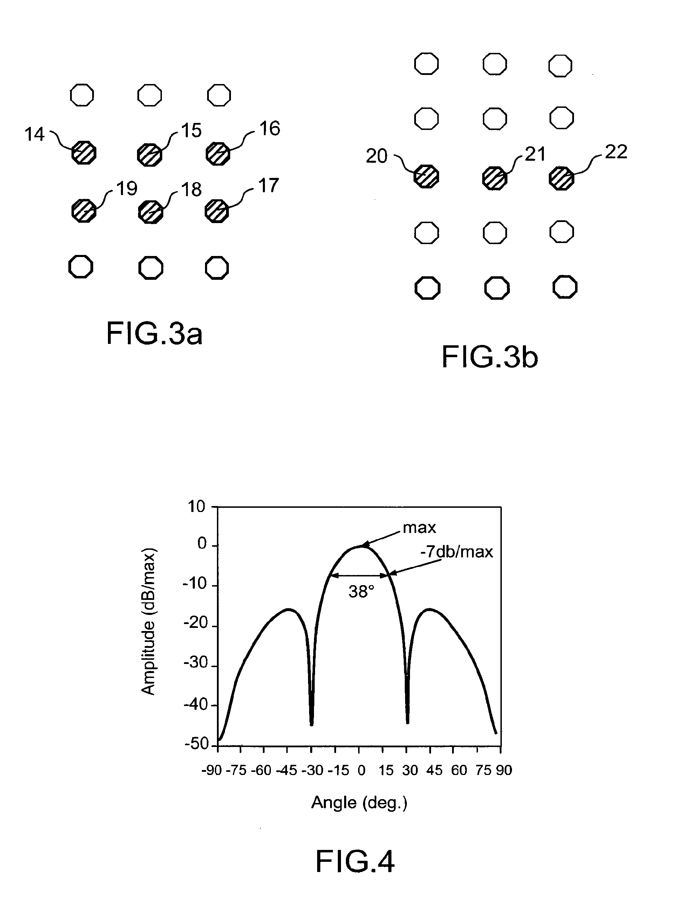

Les configurations et le nombre de sources élémentaires utilisées pour synthétiser un faisceau ne sont pas limités aux exemples représentés sur les figures 2a, 2b, 2c. Il est également possible de choisir une maille carrée ou rectangulaire, comme représenté par exemple sur les figures 3a et 3b, avec un nombre de sources élémentaires différent de sept et un nombre de sources élémentaires en partage différent de un, deux ou quatre. Ainsi, sur la figure 3a, chaque sous-réseau comporte neuf sources élémentaires dont six sources élémentaires 14 à 19 sont en partage et sur la figure 3b, chaque sous-réseau comporte neuf sources élémentaires dont trois sources élémentaires 20 à 22 sont en partage.

Lorsque la géométrie des sous-réseaux est choisie, la distance de décalage entre deux sous-réseaux consécutifs permet de déterminer les positions relatives des centres des deux spots qui seront rayonnés par ces deux sous-réseaux et d'en déduire de manière connue, la distance focale F du réflecteur parabolique 90 à utiliser. Dans le cas du choix d'un angle de faisceau e égal à 0,5°, pour que les spots se touchent, il faut que la distance entre les centres des deux spots corresponde à une distance angulaire de 0,5°. Ces conditions permettent d'aboutir, de manière connue, après éventuellement plusieurs itérations à une valeur particulière du rapport F/D à réaliser pour le réflecteur 90.

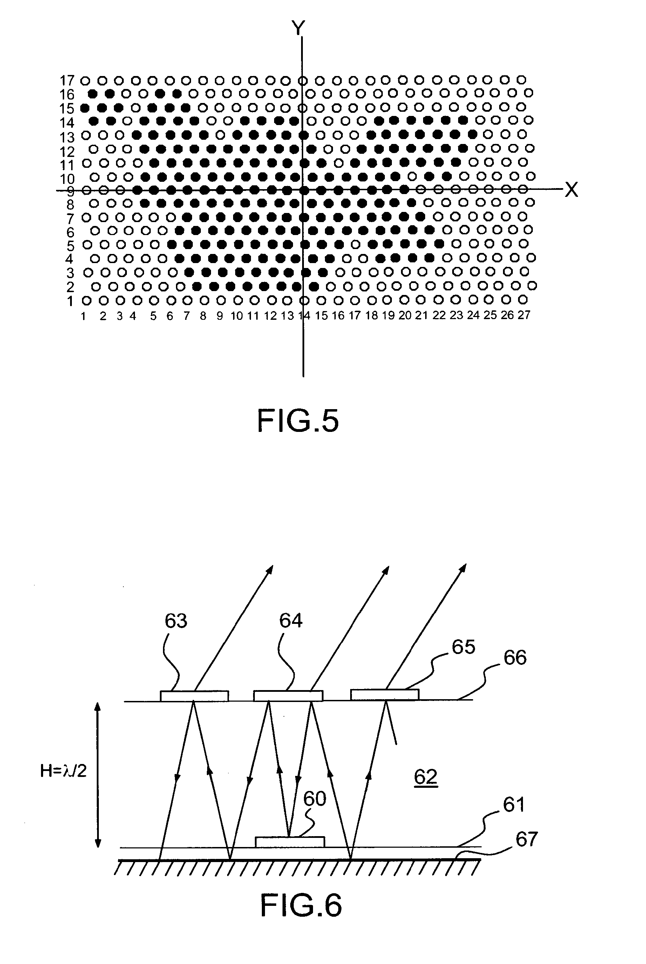

A titre d'exemple non limitatif, pour échantillonner l'Europe avec une cinquantaine de faisceaux ayant un angle de faisceau e égal à 0,5°, avec un choix de maille hexagonale à sept sources élémentaires de type patch, les centres de deux patchs consécutifs étant espacés d'un pas égal à 0,85 λ, λ étant la longueur d'onde de fonctionnement, les patchs ayant une directivité égale à 9 dBi (9 dB par rapport à une antenne isotrope), le décalage entre deux sous-réseaux consécutifs étant égal à deux pas et pour une fréquence égale à 6GHz, il faut un réflecteur ayant une focale de 9260 mm, soit un rapport F/D égal à 1,42. Dans ce cas, le pas séparant les centres de deux patchs consécutifs est égal à 42,7mm et le décalage entre deux sous-réseaux est égal à 85,4mm et correspond à un pointage d'un deuxième faisceau à 0,5° d'un premier faisceau. Le diagramme de rayonnement théorique obtenu avec un sous-réseau dont les paramètres géométriques correspondent à l'exemple ci-dessus et représenté sur la figure 4, montre que le sous-réseau éclaire le réflecteur avec une amplitude égale à -7dB par rapport au maximum sur un angle de 38° environ. Le sous-réseau ainsi réalisé est donc adapté de façon satisfaisante par rapport au réflecteur. Les différents paramètres de dimensionnement ainsi définis dans cet exemple, permettent de réaliser une couverture de l'Europe avec une configuration de réseau focal à 43 faisceaux correspondant à 43 spots, comme représenté sur la figure 5. Chaque faisceau étant élaboré par un sous-réseau constitué d'un groupe de sept sources élémentaires réparties selon une maille hexagonale et deux sous-réseaux consécutifs étant décalés de deux sources élémentaires, le nombre de sources élémentaires nécessaires à la synthèse des 43 faisceaux est égal à 209 sources élémentaires. A titre de comparaison, il aurait fallu utiliser 301 sources élémentaires s'il n'y avait pas eu un partage de sources entre deux faisceaux consécutifs, les 301 sources correspondant au produit simple du nombre de faisceaux par le nombre de sources élémentaires nécessaires à la synthèse d'un faisceau (43x7=301). Le partage des sources élémentaires permet donc de réduire la complexité de l'antenne et des circuits de formation de faisceaux.

Le partage des sources peut être réalisé de différentes façons tel que par exemple, au moyen de BFN orthogonaux, au moyen d'un changement de polarisation entre un premier faisceau et un deuxième faisceau qui ont une ou plusieurs sources en partage, ou par défaut d'alimentation de la source en partage lors de l'élaboration du deuxième faisceau. Dans le cas d'un défaut d'alimentation de la source en partage, un premier faisceau est généré par sept sources élémentaires et un second faisceau adjacent au premier faisceau est généré par six sources élémentaires.

Pour réaliser le partage des sources de façon simple, l'invention consiste à coupler entre elles les sources élémentaires d'un même sous-réseau par couplage électromagnétique.

Par cette approche et de façon très efficace, les sources élémentaires couplées entre elles dans un même sous-réseau forment une source, appelée source composite, à la directivité adaptée au rayonnement vers le réflecteur, tout en respectant les contraintes physique et géométrique associées au positionnement des faisceaux sur la zone de couverture, c'est à dire correspondant à des pas inférieurs à ceux préconisés par la directivité souhaitée.

Pour coupler les sources entre elles, les sources élémentaires de chaque sous-réseau peuvent être excitées par une source excitatrice alimentée par un signal d'excitation tel que représenté par exemple sur la figure 6. Sur cette figure, la source excitatrice 60 est un patch déposé sur une première face 61 d'un substrat diélectrique 62 et les sources élémentaires du sous-réseau sont des patchs 63, 64, 65 déposés sur une deuxième face 66 opposée du substrat diélectrique 62 et parallèle à la première face 61. Tous les patchs 63, 64, 65 sont identiques et la source excitatrice 60 est disposée au droit de la source élémentaire centrale 64 du sous-réseau, c'est-à-dire que les centres des deux patchs 60, 64 se trouvent sur la même normale au plan des faces parallèles du substrat diélectrique 62. La hauteur H de la structure portant les sources excitées par couplage se trouve approximativement à une distance égale à λ/2, λ étant la longueur d'onde d'excitation en espace vide. La source excitatrice 60 est à faible distance d'une surface conductrice 67 formant un plan de masse. Dans cet exemple, la source d'excitation 60 est un patch métallique, mais l'excitation pourrait aussi être réalisée par une fente réalisée dans le plan de masse 67 ou par un résonateur diélectrique. L'ensemble constitué du diélectrique 62 et des patchs 60, 63, 64, 65 constitue un guide d'onde fonctionnant à une fréquence particulière de longueur d'onde λ. La gestion précise de l'impédance de l'ensemble de la structure peut se faire par exemple par des iris, non représentés, implantés dans le diélectrique pour en permettre l'adaptation. Le signal électrique d'alimentation de la source excitatrice 60 peut être acheminé par exemple, par l'intermédiaire d'une ligne de transmission coaxiale ou micro-ruban ou tri-plaque non représentée.

Cette structure permet en alimentant une seule source excitatrice par sous-réseau, la source excitatrice étant disposée sous la source élémentaire centrale, de coupler en phase les sources élémentaires du sous-réseau, par exemple en nombre de sept pour une maille hexagonale, et d'élaborer ainsi des faisceaux à directivité augmentée sans utiliser des circuits complexes à BFN, dont la topologie devient vite inextricable dès que le degré de partage des sources entre plusieurs faisceaux est important, comme par exemple dans le cas des spots centraux de la figure 1. Le partage des sources s'effectue alors de manière naturelle par couplage électromagnétique entre les sources élémentaires du sous-réseau considéré.

Le couplage des sources entre elles, peut également être réalisé en alimentant la source élémentaire centrale de chaque sous-réseau. Les autres sources élémentaires du sous-réseau entourant la source élémentaire centrale, sont alors alimentées par rayonnement électromagnétique de la source élémentaire centrale sur les sources élémentaires périphériques. Ce rayonnement électromagnétique induit des courants sur les sources élémentaires périphériques ce qui provoque le couplage des sources élémentaires entre elles. Lorsque les sources sont en phase, le rayonnement global de toutes les sources élémentaires du sous-réseau synthétise un faisceau à directivité augmentée sans utiliser de circuits à BFN.

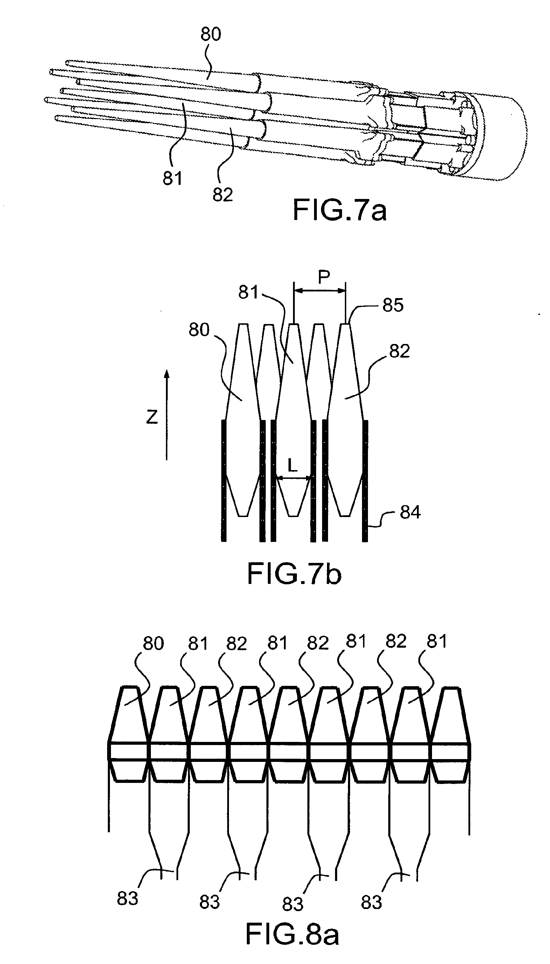

L'invention n'est pas limitée à des antennes à patch. Il est également possible d'utiliser des antennes cornet ou des antennes diélectriques appelées aussi antennes cierges. Les figures 7a et 7b montrent deux vues schématiques, respectivement en perspective et de face, d'un exemple de sous-réseau comportant plusieurs sources élémentaires 80, 81 de type antennes diélectriques et les figures 8a et 8b deux vues schématiques, respectivement en coupe transversale et de dessus, d'un exemple de réseau focal à partage de sources comportant plusieurs sous-réseaux de sept sources élémentaires de type antennes diélectriques agencées selon une maille hexagonale. De la même façon que pour les patchs, l'invention consiste à alimenter, à une extrémité inférieure 83, l'antenne diélectrique centrale 81 d'une maille, par exemple hexagonale, et les antennes diélectriques périphériques 80, 82 appartenant à la même maille hexagonale se couplent naturellement entre elles et à l'antenne diélectrique centrale 81, par couplage électromagnétique. Par exemple, pour un diamètre interne L de chaque antenne diélectrique élémentaire égal à 7,4mm ou à 10mm, le pas P entre les centres de deux antennes cierges consécutives peut être alors égal à 16mm. Dans le cadre des antennes cierges, l'onde, engendrée par l'alimentation de l'antenne cierge centrale 81, se propage selon un axe z de l'antenne diélectrique en étant confinée dans le guide d'onde chargé de diélectrique de diamètre 7,4mm ou 10mm et délimité par les parois métalliques 84 de maintien du cierge. Le couplage électromagnétique entre les cierges est obtenu par un déconfinement de l'onde dans une zone de déconfinement située à une extrémité supérieure 85, au niveau du cône de sortie des cierges où les parois métalliques 84 disparaissent. Dans la zone de déconfinement, les champs issus de l'antenne diélectrique excitatrice centrale 81 vont naturellement s'étaler en mode transverse, se coupler aux antennes diélectriques environnantes 80, 82 et induire des couplages mutuels qui contribuent au rayonnement final de l'ensemble des antennes de la maille. L'impédance de fermeture des antennes diélectriques induites 80, 82 est déterminée de façon à conférer, au comportement global, un accroissement de directivité recherché. L'ensemble se comporte alors comme un sous-réseau de 7 barreaux diélectriques constitué d'un barreau central 81 constituant une source excitatrice et de six barreaux périphériques 80, 82 constituant des sources couplées dont les conditions d'impédance sont déterminées de sorte à maîtriser les coefficients de couplage et de re-rayonnement des antennes diélectriques en accord avec les objectifs souhaités du sous-réseau couplé ainsi obtenu. Dans les exemples de réseaux représentés sur les figures 8a et 8b, chaque sous-réseau de sept sources, agencées dans une maille hexagonale, comporte deux sources 82 périphériques en partage avec un sous-réseau adjacent.

Bien que l'invention ait été décrite en relation avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, pour améliorer encore les performances de l'antenne, le sous-réseau peut comporter plusieurs couronnes de sources périphériques alimentées par couplage électromagnétique autour d'une source centrale.

## Revendications

1. Antenne à partage de sources pour l'élaboration de multi-faisceaux, comportant une pluralité de sources élémentaires identiques et espacées d'un pas (P) constant, **caractérisée en ce que** :
- les sources élémentaires (1 à 22, 63, 64, 65, 80, 81, 82) sont associées en sous-réseaux identiques (1 à 7, 4 à 10) autour d'une source élémentaire centrale (7, 5, 64, 81), chaque sous-réseau (1 à 7, 4 à 10) éclairant un réflecteur (90), les sources élémentaires de chaque sous-réseau étant couplées en phase entre elles par couplage électromagnétique,
- et **en ce que** deux sous-réseaux successifs (1 à 7, 4 à 10) comportent au moins une source élémentaire en commun (4, 5, 6, 7) et sont décalés d'une distance correspondant à un nombre de pas (P) prédéterminé supérieur ou égal à un.

2. Antenne selon la revendication 1, **caractérisée en ce que** chaque sous-réseau comporte une seule source d'excitation (60, 81).

3. Antenne selon la revendication 2, **caractérisée en ce que** la source d'excitation est la source élémentaire centrale (81) de chaque sous-réseau

4. Antenne selon la revendication 3, **caractérisée en ce que** les sources élémentaires sont des patchs métalliques (63, 64, 65) déposés sur une première face d'un substrat diélectrique (66) comportant une deuxième face opposée (61), parallèle à la première face (66) et montée sur un plan métallique (67) formant plan de masse.

5. Antenne selon la revendication 2, **caractérisée en ce que** les sources élémentaires sont des patchs métalliques (63, 64, 65) déposés sur une première face d'un substrat diélectrique (66) comportant une deuxième face opposée (61) parallèle à la première face (66) et montée sur un plan métallique (67) formant plan de masse et **en ce que** la source excitatrice (60) est montée sur la deuxième face (61) du diélectrique, au droit de la source élémentaire centrale (64) de chaque sous-réseau.

6. Antenne selon la revendication 3, **caractérisée en ce que** les sources élémentaires sont des antennes diélectriques (80, 81, 82).

7. Procédé d'élaboration d'une antenne à partage de sources selon l'une des revendications précédentes pour l'élaboration de multi-faisceaux, l'antenne comportant une pluralité de sources élémentaires identiques et espacées d'un pas (P) constant, **caractérisé en ce qu'**il comporte les étapes suivantes :
- choisir un diamètre D de réflecteur parabolique (90),
- choisir un type de source élémentaire,
- dimensionner et réaliser un sous-réseau de plusieurs sources élémentaires (1 à 7) autour d'une source centrale (7), le sous-réseau éclairant ledit réflecteur et étant destiné à synthétiser un faisceau (30) ayant une ouverture angulaire prédéterminée, les sources du sous-réseau étant couplées en phase entre elles par couplage électromagnétique,
- choisir un nombre de pas (P) de décalage entre deux sous-réseaux successifs, le nombre de pas étant supérieur ou égal à un et tel que les deux sous-réseaux successifs comportent au moins une source élémentaire (7, 5) en commun,
- déterminer une distance focale F du réflecteur parabolique (90),
- calculer l'ouverture angulaire des faisceaux correspondants aux choix réalisés aux étapes précédentes et comparer des performances théoriques de l'antenne à des performances souhaitées.

8. Procédé selon la revendication 7, **caractérisé en ce qu'**il consiste en outre, si les performances théoriques ne correspondent pas aux performances souhaitées, à modifier les dimensions du réflecteur vers une valeur plus grande du rapport F/D, à augmenter les dimensions du sous-réseau, et donc sa directivité, proportionnellement à la distance focale du réflecteur et à recalculer les nouvelles performances théoriques de l'antenne avec ces nouvelles dimensions

## Patentansprüche

1. Antenne mit gemeinsam benutzten Strahlern für den Entwurf von Mehrstrahlantennen, eine Vielzahl identischer, in einem konstanten Schritt (P) beabstandeter Elementarstrahler aufweisend, **dadurch gekennzeichnet, dass**:
- die Elementarstrahler (1 bis 22, 63, 64, 65, 80, 81, 82) in identischen Unternetzwerken (1 bis 7, 4 bis 10) um einen zentralen Elementarstrahler (7, 5, 64, 81) zugeordnet sind, wobei jedes Unternetz (1 bis 7, 4 bis 10) einen Reflektor (90) bestrahlt, wobei die Elementarstrahler jedes Unternetzes untereinander durch elektromagnetische Kopplung in Phase gekoppelt sind,
- und dass zwei aufeinanderfolgende Unternetze (1 bis 7, 4 bis 10) mindestens einen gemeinsamen Elementarstrahler (4, 5, 6, 7) aufweisen und in einem Abstand versetzt sind, der einer vorbestimmten Anzahl von Schritten (P) größer als oder gleich 1 entspricht.

2. Antenne nach Anspruch 1, **dadurch gekennzeichnet, dass** jedes Unternetz eine einzige Erregungsquelle (60, 81) aufweist.

3. Antenne nach Anspruch 2, **dadurch gekennzeichnet, dass** die Erregungsquelle der zentrale Elementarstrahler (81) jedes Unternetzes ist.

4. Antenne nach Anspruch 3, **dadurch gekennzeichnet, dass** die Elementarstrahler Metallpatche (63, 64, 65) sind, die auf einer ersten Fläche eines dielektrischen Substrats (66) aufgebracht sind, das eine zweite gegenüberliegende Fläche (61) aufweist, die zur ersten Fläche (66) parallel ist und auf einer Metallebene (67) montiert ist, die eine Massenebene bildet.

5. Antenne nach Anspruch 2, **dadurch gekennzeichnet, dass** die Elementarstrahler Metallpatche (63, 64, 65) sind, die auf einer ersten Fläche eines dielektrischen Substrats (66) aufgebracht sind, das eine zweite gegenüberliegende Fläche (61) aufweist, die zur ersten Fläche (66) parallel ist und auf einer Metallebene (67) montiert ist, die eine Massenebene bildet und dass die Erregungsquelle (60) auf der zweiten Fläche (61) des Dielektrikums gegenüber dem zentralen Elementarstrahler (64) jedes Unternetzes montiert ist.

6. Antenne nach Anspruch 3, **dadurch gekennzeichnet, dass** die Elementarstrahler dielektrische Antennen (80, 81, 82) sind.

7. Verfahren für den Entwurf einer Antenne mit gemeinsam benutzten Strahlern nach einem der vorangehenden Ansprüche für den Entwurf von Mehrstrahlantennen, wobei die Antenne eine Vielzahl identischer, in einem konstanten Schritt (P) beabstandeter Elementarstrahler aufweist, **dadurch gekennzeichnet, dass** es die folgenden Schritte umfasst:
- Auswählen eines Durchmessers D eines Parabolreflektors (90),
- Auswählen eines Elementarstrahlertyps,
- Dimensionieren und Herstellen eines Unternetzes aus mehreren Elementarstrahlern (1 bis 7) um einen zentralen Strahler (7), wobei das Unternetz den Reflektor bestrahlt und dazu bestimmt ist, ein Bündel (30) mit einer vorbestimmten Winkelöffnung zu synthetisieren, wobei die Strahler des Unternetzes untereinander durch elektromagnetische Kopplung in Phase gekoppelt sind,
- Auswählen einer Anzahl von Versatzschritten (P) zwischen zwei aufeinanderfolgenden Unternetzen, wobei die Anzahl der Schritte größer als oder gleich 1 ist und derart, dass die zwei aufeinanderfolgenden Unternetze mindestens einen gemeinsamen Elementarstrahler (7, 5) aufweisen,
- Bestimmen eines Fokalabstands F des Parabolreflektors (90),
- Berechnen der Winkelöffnung der den in den vorangehenden Schritten getroffenen Auswahlen entsprechenden Strahlen und Vergleichen der theoretischen Leistungen der Antenne mit gewünschten Leistungen.

8. Verfahren nach Anspruch 7, **dadurch gekennzeichnet, dass** es ferner darin besteht, dass, wenn die theoretischen Leistungen nicht den gewünschten Leistungen entsprechen, die Dimensionen des Reflektors in Richtung eines größeren Werts des Verhältnisses F/D verändert werden, die Dimensionen des Unternetzes und damit seine Direktivität erhöht werden, proportional zum Fokalabstand des Reflektors, und die neuen theoretischen Leistungen der Antenne mit diesen neuen Dimensionen neu berechnet werden.

## Claims

1. An antenna with shared feeds for generating multiple beams, comprising a plurality of identical elementary feeds spaced apart by a constant (P) pitch, **characterised in that**:
- the elementary feeds (1 to 22, 63, 64, 65, 80, 81, 82) are associated in identical sub-arrays (1 to 7, 4 to 10) around a central elementary feed (7, 5, 64, 81), each sub-array (1 to 7, 4 to 10) illuminating a reflector (90), the elementary feeds of each sub-array being phase-coupled together by electromagnetic coupling,
- and **in that** two successive sub-arrays (1 to 7, 4 to 10) comprise at least one shared elementary feed (4, 5, 6, 7) and are offset by a distance that corresponds to a predetermined number of pitches (P) that is greater than or equal to one.

2. The antenna according to claim 1, **characterised in that** each sub-array comprises a single excitation feed (60, 81).

3. The antenna according to claim 2, **characterised in that** said excitation feed is the central elementary feed (81) of each sub-array.

4. The antenna according to claim 3, **characterised in that** said elementary feeds are metal patches (63, 64, 65) deposited onto a first face of a dielectric substrate (66) comprising a second opposite face (61), parallel to said first face (66) and mounted on a metal plane (67) forming a ground plane.

5. The antenna according to claim 2, **characterised in that** said elementary feeds are metal patches (63, 64, 65) deposited onto a first face of a dielectric substrate (66) comprising a second opposite face (61), parallel to said first face (66) and mounted on a metal plane (67) forming a ground plane, and **in that** said excitation feed (60) is mounted on said second face (61) of the dielectric, opposite the central elementary feed (64) of each sub-array.

6. The antenna according to claim 3, **characterised in that** said elementary feeds are dielectric antennae (80, 81, 82).

7. A method for producing an antenna with shared feeds for generating multiple beams according to any one of the preceding claims, said antenna comprising a plurality of identical elementary feeds and being spaced apart by a constant pitch (P), **characterised in that** it comprises the following steps:
- selecting a parabolic reflector (90) diameter D;
- selecting an elementary feed type;
- dimensioning and producing a sub-array of a plurality of elementary feeds (1 to 7) around a central feed (7), said sub-array illuminating said reflector and being intended to synthesise a beam (30) with a predetermined angular aperture, the feeds of said sub-array being phase-coupled together by electromagnetic coupling;
- selecting a number of offset pitches (P) between two successive sub-arrays, the number of pitches being greater than or equal to one and being such that the two successive sub-arrays comprise at least one shared elementary feed (7, 5);
- determining a focal distance F for said parabolic reflector (90);
- computing the angular aperture of beams that correspond to the selections carried out during the preceding steps and comparing the theoretical performance of said antenna with the desired performance.

8. The method according to claim 7, **characterised in that** it further comprises, if the theoretical performance does not correspond to the desired performance, modifying the dimensions of said reflector to a higher value of the F/D ratio, increasing the dimensions of the sub-array, and thus its directivity, proportionally to the focal distance of said reflector and recomputing the new theoretical performance of said antenna with these new dimensions.
